# EUROPEAN PATENT APPLICATION

(11) **EP 4 748 960 A1**
(43) Date of publication of application: **27.05.2026**
(21) Application number: 24868376.5
(22) Date of filing: 20.09.2024
(51) Int. Cl.: C22C 38/00, B22F 10/25, B22F 10/28, B22F 10/36, B33Y 10/00, B33Y 70/00, C21D 6/00, C21D 9/00, C22C 38/24, C22C 38/36

(54) **FE-BASED ALLOY, ALLOY MEMBER, AND METHOD FOR PRODUCING ALLOY MEMBER**

(30) Priority: 22.09.2023 JP 2023159260
(71) Applicant: Proterial, Ltd., Tokyo 135-0061 (JP)
(72) Inventor: OKAMOTO, Shinya, Tokyo 135-0061 (JP); KOSEKI, Shuho, Tokyo 135-0061 (JP)
(74) Representative: Becker, Eberhard
(86) International application number: PCT/JP2024/033766
(87) International publication number: WO 2025/063300

(57) **Abstract**

Provided are: an Fe-based alloy which is unlikely to crack and which is expected to exhibit toughness and thermal cracking resistance; an alloy member; and a method for producing an alloy member. The Fe-based alloy is characterized: by containing C, Cr, W, Mo and V, with the remainder comprising Fe and unavoidable impurities; having an alloy structure that contains an Fe-BCC phase; in that the Fe-BCC phase contains, in terms of mass%, 3.0-7.0% of C, 2.0-6.0% of Cr, 0.5-4.0% of W, 0.5-4.0% of Mo, 0.5-4.0% of V and 75.0-93.5% of Fe if the total amount of C, Cr, W, Mo, V and Fe is taken to be 100 mass%; in that the alloy has a precipitated carbide in the Fe-BCC phase; and in that the proportion of the Fe-BCC phase is 43.5% or more in terms of areal ratio in a cross-sectional structure observation.

## Description

### Technical Field

The present invention relates to a Fe-based alloy, an alloy member, and a method for manufacturing an alloy member.

### Description of Related Art

Conventionally, tools such as punches and molds for hot precision press working use hot work tool steels such as SKD8 specified in JIS G 4404, which have high high-temperature strength, or high-speed tool steels such as SKH51 specified in JIS G 4403. However, there have been problems that sagging, wear, breakage, cracking, and heat cracks tend to occur.

For example, Patent Document 1 discloses a tool steel having, in mass%, C (carbon) of 0.4 to 0.9%, Si (silicon) of 1.0% or less, Mn (manganese) of 1.0% or less, one or two of W (tungsten) and Mo (molybdenum) of 1.5 to 6% in terms of (1/2W+Mo) (provided that W is 3% or less), and one or two of V (vanadium) and Nb (niobium) of 0.5 to 3% in terms of (V+Nb), characterized in that precipitated carbides dispersed in a matrix have an average particle diameter of 0.5 µm or less and a distribution density of 80×10³ particles/mm² or more, which is a high-speed tool steel.

### Related Art

### Patent Documents

Patent Document 1: Japanese Patent Application Laid-Open No. 2004-307963

### SUMMARY

### Technical Problem

The tool steel of Patent Document 1 forms coarse primary carbides in the ingot due to solidification segregation during cooling in ingot making such as steel ingot casting or remelting processes. The presence of the coarse primary carbides promotes crack initiation and propagation, thereby reducing toughness and heat crack resistance. The precipitated carbides are preferably in a finely dispersed and uniform structure. To obtain such a structure, soaking at 1200-1300°C for 10-20 hours is required. However, even with such soaking treatment, quenching treatment and tempering treatment are performed in subsequent processes to obtain forging tools such as dies and punches, and molds. Here, coarse precipitated carbides may precipitate, which may reduce toughness and heat crack resistance.

Therefore, the present invention aims to provide a Fe-based alloy, an alloy member, and a method for manufacturing an alloy member in which cracks are less likely to occur and which can be expected to have toughness and heat crack resistance.

### Solution to the Problem

The present invention is an Fe-based alloy which includes C, Cr, W, Mo and V, with the remainder consisting of Fe and inevitable impurity elements, and has an alloy structure including an Fe-BCC phase, in which the Fe-BCC phase includes, in mass%, when the total of C, Cr, W, Mo, V and Fe is 100%, C of 3.0% or more and 7.0% or less, Cr of 2.0% or more and 6.0% or less, W of 0.5% or more and 4.0% or less, Mo of 0.5% or more and 4.0% or less, V of 0.5% or more and 4.0% or less, and Fe of 75% or more and 93.5% or less, and has a precipitated carbide precipitated in the Fe-BCC phase, and the ratio of the Fe-BCC phase is 43.5% or more in an area ratio in cross-sectional microstructure observation.

Further, it is preferable that the entire Fe-based alloy includes, in mass%, C of 0.1% or more and 2.0% or less, Cr of 2.0% or more and 6.0% or less, W of 0.5% or more and 4.0% or less, Mo of 0.5% or more and 4.0% or less, V of 0.5% or more and 4.0% or less, Si of 1.0% or less, and Mn of 1.0% or less, with the remainder consisting of Fe and inevitable impurities.

Moreover, the Fe-BCC phase preferably includes, in mass%, C of 4.8% or more and 6.0% or less, Cr of 3.9% or more and 6.0% or less, W of 1.5% or more and 3.0% or less, Mo of 2.2% or more and 3.1% or less, and V of 1.5% or more and 3.0% or less.

The present invention also provides an alloy member including at least a portion of the Fe-based alloy.

Further, the hardness of the Fe-based alloy is preferably 700 HV or more.

The present invention is also a method for manufacturing an alloy member, which includes using an alloy powder that includes, in mass%, C of 0.1% or more and 2.0% or less, Cr of 2.0% or more and 6.0% or less, W of 0.5% or more and 4.0% or less, Mo of 0.5% or more and 4.0% or less, V of 0.5% or more and 4.0% or less, Si of 1.0% or less, and Mn of 1.0% or less, with the remainder consisting of Fe and inevitable impurities, irradiating the alloy powder with an electron beam or laser beam to cause melting and solidification to form a solidified layer, forming a new solidified layer on the solidified layer, and then repeating the operation to obtain an alloy member having a layered structure.

### Effects

According to the present invention, it is probable to provide a Fe-based alloy, an alloy member, and a method for manufacturing an alloy member in which cracks are less likely to occur and which can be expected to have toughness and heat crack resistance.

### BRIEF DESCRIPTION OF THE DRAWINGS

FIG. 1 is a diagram illustrating a schematic configuration of an additive manufacturing method.
FIG. 2A shows structure photographs and element mapping images of a deposited body after quenching treatment.
FIG. 2B shows structure photographs and element mapping images of a deposited body after quenching treatment and tempering treatment.
FIG. 2C shows structure photographs and element mapping images of a deposited body (without heat treatment).
FIG. 2D shows structure photographs and element mapping images of a deposited body after tempering treatment.
FIG. 2E shows structure photographs and element mapping images of conventional forged material after quenching treatment and tempering treatment.

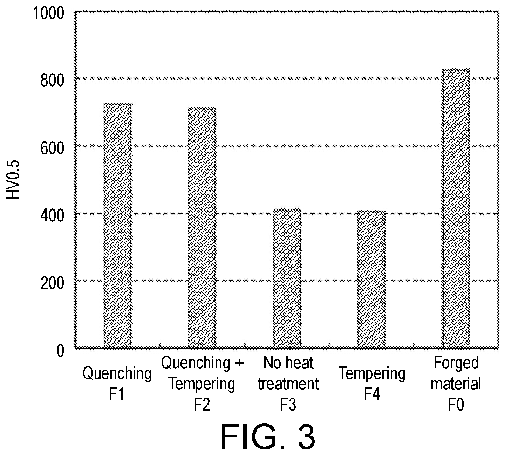

FIG. 3 is a diagram showing the Vickers hardness (HV) of each of the deposited bodies.

### DESCRIPTION OF EMBODIMENTS

Hereinafter, an embodiment of the present invention will be described. First, a Fe-based alloy will be described, and then an additive manufacturing method will be described. In the following description, % indicates mass%. Further, in the specification, a numerical range expressed using "to" means a range that includes the numerical values described before and after "to" as a lower limit value and an upper limit value. Moreover, the lower limit value and the upper limit value of the numerical range can be appropriately combined.

### <Fe-based alloy>

The Fe-based alloy of the embodiment includes C, Cr, W, Mo and V, with the remainder consisting of Fe and inevitable impurity elements. In other words, the Fe-based alloy is a high-speed tool steel including C, Cr, W, Mo, V and Fe, and has an alloy structure including an Fe-BCC phase, in which the Fe-BCC phase includes, in mass%, when the total of C, Cr, W, Mo, V and Fe is 100%, C of 3.0% or more and 7.0% or less, Cr of 2.0% or more and 6.0% or less, W of 0.5% or more and 4.0% or less, Mo of 0.5% or more and 4.0% or less, V of 0.5% or more and 4.0% or less, and Fe of 75.0% or more and 93.5% or less, and has a precipitated carbide in the Fe-BCC phase, and the ratio of the Fe-BCC phase is 43.5% or more in an area ratio in cross-sectional microstructure observation as one of the characteristics.

### (Fe-BCC phase)

The Fe-BCC phase is generally a structure that includes α-Fe and martensite formed in the case of cooling a Fe-based alloy from high temperature. Here, in the case of an Fe-BCC phase obtained by a method with a fast melting and solidification rate, that is, a fast cooling rate, for example, an Fe-BCC phase obtained using an additive manufacturing method, the Fe-BCC phase refers to a structure including martensite of an Fe-based alloy in which C is supersaturatedly dissolved in solid solution, and such an Fe-BCC phase is hard. The Fe-based alloy of the embodiment includes, in the Fe-BCC phase, 3.0% to 7.0% of C, 2.0% to 6.0% of Cr, 0.5% to 4.0% of W, 0.5% to 4.0% of Mo, 0.5% to 4.0% of V, and 75.0% to 93.5% of Fe. The Fe-BCC phase can be evaluated using electron back scattering diffraction (EBSD). The description of the evaluation method using EBSD will be described later.

### (C: 3.0 to 7.0%)

C combines with elements that form carbides, such as Cr, W, Mo and V, to precipitate carbides. The carbides that have been precipitated (precipitated carbides) generate composite carbides in which, for example, carbides called M₆C type and MC type are compositely precipitated, and thus have an effect of improving the wear resistance of the Fe-based alloy, the alloy member and the manufactured product thereof. In addition, a portion of C dissolves in solid solution in the matrix, thereby having an effect of strengthening the matrix. Therefore, by setting the content of C in the Fe-BCC phase to 3.0% or more, the hardness of the Fe-BCC phase can be secured by the combined effects of both matrix strengthening and fine carbides formed within the crystal grains of the matrix. On the other hand, by setting the content of C in the Fe-BCC phase to 7.0% or less, an excessive formation amount of carbides within the grains of the matrix can be suppressed, and toughness can be ensured. The content is preferably 4.0% to 7.0%, and more preferably 4.8% to 6.0%.

### (Cr: 2.0 to 6.0%)

Cr combines with C to form carbides, improving wear resistance and also contributing to improved hardenability. By setting the content of Cr in the Fe-BCC phase to 2.0% or more, the formation amount of carbides within the grains of the matrix can be optimized, and wear resistance and hardenability can be improved. On the other hand, by setting the content of Cr in the Fe-BCC phase to 6.0% or less, an excessive formation amount of carbides within the grains of the matrix can be suppressed, and toughness can be ensured. The content is preferably 3.0% to 6.0%, and more preferably 3.9% to 6.0%.

### (W: 0.5 to 4.0%)

W combines with C to form carbides, contributing to improvement in wear resistance. Since W also contributes to ensuring strength in high-temperature environments, W is particularly effective for improving wear resistance of molds used in high-temperature environments. By setting the content of W in the Fe-BCC phase to 0.5% or more, W dissolves in solid solution in the matrix and heat treatment hardness increases, so wear resistance can be improved. On the other hand, by setting the content of W in the Fe-BCC phase to 4.0% or less, an excessive formation amount of carbides within the grains of the matrix can be suppressed, and toughness can be ensured. The content is preferably 1.0% to 3.5%, and more preferably 1.5% to 3.0%.

### (Mo: 0.5 to 4%)

Mo combines with C to form carbides, improving wear resistance and also contributing to improved hardenability. By setting Mo in the Fe-BCC phase to 0.5% or more, Mo dissolves in solid solution within the grains of the matrix and heat treatment hardness increases, so wear resistance can be improved. On the other hand, by setting Mo in the Fe-BCC phase to 4.0% or less, an excessive formation amount of carbides within the grains of the matrix can be suppressed, and toughness can be ensured. Mo is preferably 1.5% to 3.5%, and more preferably 2.2% to 3.1%.

### (V: 0.5 to 4.0%)

V combines with C to form carbides, contributing to improvement in wear resistance and seizure resistance. By setting the content of V in the Fe-BCC phase to 0.5% or more, fine carbides that are difficult to aggregate precipitate within the grains of the matrix through heat treatment, softening resistance in high-temperature regions increases, and high-temperature strength is enhanced. Moreover, crystal grains of the matrix become fine and toughness improves, while the A1 transformation point rises, and combined with exemplary high-temperature strength, heat crack resistance improves. On the other hand, by setting V in the Fe-BCC phase to 4.0% or less, an excessive formation amount of carbides within the grains of the matrix can be suppressed, and toughness can be ensured. The content is preferably 1.0% to 3.5%, and more preferably 1.5% to 3.0%.

### (Carbide)

In the Fe-BCC phase, carbides including C and at least one of Cr, W, Mo and V (hereinafter, precipitated carbides) are precipitated. In the Fe-BCC phase, C combines with carbide forming elements such as Cr, W, Mo and V to form hard carbides, which is effective in improving wear resistance. Further, C has an effect of strengthening the matrix by dissolving in solid solution in a portion of the matrix. The phase including precipitated carbides can be referred to as a carbide phase. Cr, V, Mo and W are more concentrated in the carbide phase than in the Fe-BCC phase, and this is a region with particularly high C content. The carbide phase includes, for example, C of 12% to 15%, Cr of 3% to 5%, W of 3% to 9%, Mo of 5% to 12%, V of 15% to 45% and Fe of 15% to 60%.

In addition, by having the precipitated carbides appropriately refined, cracks can be less likely to occur, resulting in a Fe-based alloy with exemplary toughness and heat crack resistance. The size of the precipitated carbide is refined to an equivalent circular average particle diameter of 1.5 µm or less. The size is preferably 0.50 µm to 1.45 µm, and more preferably 1.1 µm to 1.45 µm. For example, in the case of using EBSD, the average particle diameter can be determined by targeting carbides that are visible in the case of setting the area of the observation field (region area) to 200×200 (µm) and the magnification to 400 times or more.

### (Ratio of Fe-BCC Phase)

The higher the ratio of a Fe-BCC phase, the more uniform the metal structure becomes, and for example, local strain is less likely to occur due to external stress, so cracks are less likely to occur. Specifically, the ratio of the Fe-BCC phase is 43.5% or more, preferably 43.8% or more, in terms of the area ratio in cross-sectional microstructure observation of the alloy to be observed. The upper limit is not particularly restricted, but can be, for example, 60.0% or less, 50.0% or less, or 45.0% or less.

### (Equivalent Circular Average Particle Diameter of Fe-BCC Phase)

In addition, since the equivalent circular average particle diameter of the Fe-BCC phase can improve the mechanical strength of the alloy member as the equivalent circular average particle diameter becomes finer, the equivalent circular average particle diameter is preferably 8.50 µm or less, more preferably 7.30 µm or less, further preferably 5.50 µm or less, and even more preferably 5.30 µm or less.

### [Method for Calculating Ratio and Equivalent Circular Average Particle Diameter of Fe-BCC Phase]

The ratio and equivalent circular average particle diameter of the aforementioned Fe-BCC phase can be calculated as follows. First, for any cross-sectional structure of the alloy, for example, in the case of the alloy being produced by an additive manufacturing method, a phase map is obtained from image data of a field of view (observation field) observed using EBSD for any cross-section obtained by cutting in a direction perpendicular to a layering direction. Here, the any cross-section can be, for example, a Y-Z plane in the case of a molding direction being X, the layering direction being Z, and an axis perpendicular to both X and Z being Y. As the image data, for example, an RGB image can be used. Moreover, image data having an area of the observation field of 100 µm² to 500 µm² can be used. The phase map obtained by EBSD is divided into respective colors (red, green, blue), and merely the Fe-BCC portions are extracted. Noise in the image is removed by filtering, and binary black-and-white conversion and inversion of the black and white of the image are performed (for example, the original red portions (Fe-BCC phase) are displayed in black).

Subsequently, the Watershed method is used to segment the observation field into Fe-BCC phase portions and other portions. The ratio (S_{F}/S_{A}) occupied by the total area (S_{F}) of the Fe-BCC phase portions determined to be the Fe-BCC phase through segmentation relative to the area (S_{A}) of the observation field can be used as the ratio of the Fe-BCC phase. Additionally, by calculating the equivalent circular particle diameter of each of the Fe-BCC phases within the segmented observation field and averaging the equivalent circular particle diameters, the equivalent circular average particle diameter forming the Fe-BCC phase (equivalent circular average particle diameter of the Fe-BCC phase) can be calculated.

Specifically, first, the phase map obtained by EBSD is divided into a red portion (the Fe-BCC phase), a blue portion (mainly a Fe-FCC phase), and a green portion (a portion that is neither the Fe-BCC phase nor the Fe-FCC phase, hereinafter referred to as a zero solution portion). Through such phase map division operation (segmentation), the ratio that the Fe-BCC phase and precipitated carbides occupy in the structure can be determined. By displaying an image of the divided red portion in black and white, the Fe-BCC phase is displayed in white.

By inverting the black and white display, the blue portion (mainly the Fe-FCC phase) and the zero solution portion are displayed in white. By performing such image processing, the Fe-BCC phase surrounded by the Fe-FCC phase and the zero solution portion can be extracted. The ratio of the Fe-BCC phase can be obtained by dividing the total area of the Fe-BCC phase portions by the area of the observation field (for example, 200 µm × 200 µm).

Additionally, the diameter of a circle having the same area as each of the Fe-BCC phases (equivalent circular particle diameter of the Fe-BCC phase) can be determined, and the equivalent circular average particle diameter of the Fe-BCC phase can be determined by arithmetically averaging the equivalent circular particle diameters of the Fe-BCC phases determined from all Fe-BCC phases present within the observation field.

### (Ratio and Equivalent Circular Average Particle Diameter of Precipitated Carbide)

The precipitated carbide is preferably moderately refined. By being moderately refined, cracks are less likely to occur, and in addition to exemplary toughness and heat crack resistance, exemplary wear resistance can also be expected. For example, the precipitated carbide preferably has an equivalent circular average particle diameter of 1.0 µm or more and 5.0 µm or less, more preferably 1.2 µm or more and 2.5 µm or less, and even more preferably 1.35 µm or more and 2.0 µm or less. Furthermore, the ratio of the precipitated carbide is preferably 0.5% or more, more preferably 1.0% or more, and even more preferably 2.5% or more. When the ratio of the precipitated carbide is 0.5% or more, exemplary wear resistance can also be expected, and the higher the ratio, the more remarkable the effect can be expected.

### [Method for Calculating Ratio and Equivalent Circular Average Particle Diameter of Precipitated Carbide]

A black-and-white inverted image of an image in which the Fe-BCC phase is displayed in white, that is, by subtracting an image of the blue portion divided from an image in which the blue portion (mainly the Fe-FCC phase) and the zero solution portion are displayed in white, the zero solution portion can be displayed. The zero solution portion is a portion that is neither the Fe-BCC phase nor the Fe-FCC phase, and corresponds to the precipitated carbide portion. Subsequently, the ratio of the precipitated carbide can be obtained by dividing the total area occupied by the precipitated carbide portion within the observation field by the area of the observation field (for example, 200 µm × 200 µm). Additionally, by obtaining the diameter of a circle having the same area as each of the precipitated carbides within the observation field (equivalent circular particle diameter of the precipitated carbide) and arithmetically averaging the equivalent circular particle diameters of precipitated carbides obtained from all precipitated carbides present within the field of view, the equivalent circular average particle diameter of the precipitated carbide can be calculated.

Each of structures can be evaluated using Energy-Dispersive X-ray Spectroscopy (EDS) and Electron Back Scattering Diffraction (EBSD) associated with a Scanning Electron Microscope (SEM).

As analysis conditions, for example, the acceleration voltage in the scanning electron microscope may be set to 15 kV, the working distance from the objective lens to the surface of the observation target may be set to 10 mm, and the observation magnification may be set to 3000×. Additionally, for the evaluation method of element distribution using EDS, the element distribution may be obtained by EDS surface analysis in the same field of view as the above SEM. For example, in the case of analyzing the precipitated carbide, the target elements may be, for example, C, Cr, W, Mo, V, Fe and O. The Fe-BCC phase can also be analyzed in the same manner as described above.

The alloy structure of the Fe-based alloy of the embodiment includes the Fe-BCC phase occupying 43.5% or more, and fine precipitated carbides are uniformly dispersed in the Fe-BCC phase, so cracks originating from carbides are less likely to occur, and even if cracks occur, the cracks are less likely to propagate because the carbides are uniformly dispersed. Therefore, toughness and heat crack resistance can be improved.

Further, the entire Fe-based alloy includes, in mass%, C of 0.1% to 2.0%, Cr of 2% to 6.0%, W of 0.5% to 4.0%, Mo of 0.5% to 4.0%, V of 0.5% to 4.0%, with the remainder consisting of Fe and inevitable impurity elements.

Furthermore, the alloy can further include either one or both of Si and Mn, and preferably, in mass%, Si is 1.0% or less and Mn is 1.0% or less. Si can be expected to improve oxidation resistance. It is preferable to set the above range in consideration of workability. Mn can be expected to have effects of improving wear resistance and hardenability and reducing embrittlement. It is desirable to set the above range in consideration of the influence of embrittlement due to quench cracking and residual γ.

### (C: 0.1 to 2.0%)

C (carbon) combines with carbide forming elements such as Cr, W, Mo and V to generate hard complex carbides, which has an effect of improving the wear resistance of the alloy member and the manufactured product thereof. Further, C has an effect of strengthening the matrix by dissolving in solid solution within a portion of the matrix. By setting the content of C in the entire Fe-based alloy to 0.1% or more, the hardness of the entire Fe-based alloy can be ensured through the effects of matrix strengthening, fine carbides formed within the grains of the matrix, and carbides formed at the grain boundaries of the matrix. On the other hand, by setting the content of C in the entire Fe-based alloy to 2.0% or less, an excessive formation amount of carbides in the entire Fe-based alloy can be suppressed, and the toughness of the entire Fe-based alloy can be ensured. The content of C is preferably 0.5 to 1.5%, and more preferably 0.5 to 1.0%.

### (Cr: 2.0 to 6.0%)

Cr (chromium) combines with C to form carbides, improving wear resistance and also contributing to improved hardenability. By setting the content of Cr in the entire Fe-based alloy to 2.0% or more, the formation amount of carbides in the entire Fe-based alloy can be optimized, and wear resistance and hardenability can be improved. On the other hand, by setting the content of Cr in the entire Fe-based alloy to 6% or less, an excessive formation amount of carbides in the entire Fe-based alloy can be suppressed, and toughness can be ensured. The content of Cr is preferably 3.0 to 5.0%, and more preferably 4.0 to 5.0%.

### (W: 0.5 to 4.0%)

W (tungsten) combines with C to form carbides, contributing to improvement in wear resistance. Since W also contributes to ensuring strength in high-temperature environments, W is particularly effective for improving wear resistance of molds used in high-temperature environments. By setting the content of W in the entire Fe-based alloy to 0.5% or more, W dissolves in solid solution within the grains of the matrix and heat treatment hardness increases, and carbides are also formed at the grain boundaries of the matrix, so wear resistance can be improved. On the other hand, by setting the content of W in the entire Fe-based alloy to 4% or less, an excessive formation amount of carbides in the entire Fe-based alloy can be suppressed, and toughness can be ensured. The content of W is preferably 1.0 to 2.5%, and more preferably 1.5 to 2.0%.

### (Mo: 0.5 to 4.0%)

Mo (molybdenum) combines with C to form carbides, improving wear resistance and also contributing to improved hardenability. By setting Mo in the entire Fe-based alloy to 0.5% or more, Mo dissolves in solid solution within the grains of the matrix and heat treatment hardness increases, and carbides are also formed at the grain boundaries of the matrix, so wear resistance can be improved. On the other hand, by setting Mo in the entire Fe-based alloy to 4% or less, an excessive formation amount of carbides in the entire Fe-based alloy can be suppressed, and toughness can be ensured. The content of Mo is preferably 1.5 to 3.5%, and more preferably 2.0 to 3.5%.

### (V: 0.5 to 4.0%)

V (vanadium) combines with C to form carbides, contributing to improvement in wear resistance and seizure resistance. By setting the content of V in the entire Fe-based alloy to 0.5% or more, fine carbides that are difficult to aggregate precipitate within the grains of the matrix through heat treatment, softening resistance in high-temperature regions increases, and high-temperature strength is enhanced. Moreover, crystal grains of the matrix become fine and toughness improves, while the A1 transformation point rises, and combined with exemplary high-temperature strength, heat crack resistance improves. On the other hand, by setting V in the entire Fe-based alloy to 4% or less, an excessive formation amount of carbides in the entire Fe-based alloy can be suppressed, and toughness can be ensured. The content of V is preferably 1.5 to 3.5%, and more preferably 2.0 to 3.0%.

### (Si: 1.0% or less)

Further, Si (silicon) may be contained. In the case of containing Si in the entire Fe-based alloy, the content in the entire Fe-based alloy is preferably 0.8% or less, and more preferably 0.5%, in order to improve oxidation resistance and suppress deterioration of workability. Moreover, the content is preferably 0.1 to 1.0%, more preferably 0.1 to 0.8%, and even more preferably 0.1 to 0.5%.

### (Mn: 1.0% or less)

Additionally, Mn (manganese) may be contained. In the case of containing Mn in the entire Fe-based alloy, the content in the entire Fe-based alloy is preferably 0.8% or less, more preferably 0.5% or less, in order to improve wear resistance and hardenability, reduce embrittlement, and suppress embrittlement due to quench cracking and residual γ. Furthermore, the content is preferably 0.1 to 0.8%, and even more preferably 0.1 to 0.5%.

### (Inevitable Impurities)

Inevitable impurities refer to trace impurities that are technically difficult to remove, originating from trace elements mixed into raw materials or reactions with various members contacted during the manufacturing process. In the case of the alloy of the embodiment, inevitable impurities specifically refer to, for example, Al, Cu, N, Ni, O, P, S, and Co. Among the impurities, impurities that should be particularly restricted include P, S, O, N, and the like. In mass%, P is preferably 0.03% or less, S is preferably 0.003% or less, O is preferably 0.02% or less, and N is preferably 0.05% or less. Naturally, the content of the inevitable impurities is preferably as low as possible, and 0% would be even better.

### <Method for Manufacturing Alloy Member>

The Fe-based alloy and alloy member of the embodiment can be manufactured by irradiating the alloy powder with an electron beam or laser beam to cause melting and solidification to form a solidified layer, forming a new solidified layer on the solidified layer, and then repeating the operation to obtain an alloy member having a layered structure. This is manufactured by a socalled additive manufacturing method. In the specification, this may be described as an additive manufacturing (layered manufacturing) method.

### (Alloy Powder)

Here, the alloy powder is Fe-based alloy powder that includes C, Cr, W, Mo, and V of the predetermined composition described above, with the remainder consisting of Fe and inevitable impurity elements. First, supply materials for each of elements are weighed in predetermined amounts so as to obtain an alloy of a predetermined composition range, and the supply materials are mixed to produce raw material powder. Atomized powder is obtained using the raw material powder. For example, the raw material powder is loaded into a crucible, melted by high-frequency heating, the molten alloy is dropped from a nozzle below the crucible, and sprayed with high-pressure argon to produce gas atomized powder. The alloy powder can be obtained by classifying the gas atomized powder.

The Fe-based alloy powder of the embodiment may use one that is alloyed and controlled to satisfy the composition of the Fe-based alloy described above. For example, in mass%, the Fe-based alloy powder includes C of 0.1% to 2.0%, Cr of 2% to 6.0%, W of 0.5% to 4.0%, Mo of 0.5% to 4.0%, V of 0.5% to 4.0%, Si of 1.0% or less, and Mn of 1.0% or less, with the remainder being Fe. More preferably, the Fe-based alloy powder includes C of 0.5 to 0.9%, Cr of 4.0 to 5.0%, W of 1.0 to 2.0%, Mo of 2.5 to 3.5%, V of 2.0 to 3.0%, Si of 0.8% or less, and Mn of 0.3% or less, with the remainder consisting of Fe and inevitable impurities.

In the case of manufacturing a deposited body using the Fe-based alloy powder of the embodiment, in the alloy structure of the deposited body, C combines with carbide forming elements such as Cr, W, Mo and V to generate hard complex carbides, which has an effect of improving the wear resistance of the alloy member and the manufactured product thereof. Further, C has an effect of strengthening the matrix by dissolving in solid solution within a portion of the matrix of the alloy structure of the deposited body. By setting the content of C in the Fe-based alloy powder to 0.1% or more, the hardness of the alloy structure can be ensured through the effects of strengthening the matrix of the alloy structure, fine carbides formed within the grains of the matrix, and carbides formed at the grain boundaries of the matrix. On the other hand, by setting the content of C in the Fe-based alloy powder to 2.0% or less, an excessive formation amount of carbides in the alloy structure can be suppressed, and the toughness of the entire Fe-based alloy can be ensured.

The composition of the alloy powder can be analyzed using, for example, inductively coupled plasma (ICP) optical emission spectrometry.

### (Additive Manufacturing Method)

As an embodiment for performing molding by irradiating Fe-based alloy powder with an electron beam or laser beam and causing melting and solidification, the aforementioned can be used in an additive manufacturing method of an appropriate type. Generally, additive manufacturing methods for metal materials are broadly classified into a powder bed fusion (PBF) method and a directed energy deposition (DED) method. The method can be applied to both the powder bed fusion (PBF) method and the directed energy deposition (DED) method, which are additive manufacturing methods for metal materials.

The PBF method is a method in which metal powder is spread on a base plate (substrate) to form a powder bed, a beam is irradiated to the metal powder spread in a target region, and the metal powder is melted and solidified for molding. In the PBF method, a three-dimensional deposited body, that is, an additive manufacturing body, can be manufactured by repeating the layering of the powder bed and the melting and solidification of the metal powder each time twodimensional molding is performed on the powder bed.

Powder bed fusion (PBF) methods include a method using a laser beam as a heat source and a method using an electron beam as a heat source. Methods using a laser beam are broadly classified into a selective laser melting (SLM) method and a selective laser sintering (SLS) method. The method using an electron beam is called a selective electron beam melting (SEBM, or simply EBM) method.

The selective laser melting (SLM) method is a method for melting or sintering metal powder using a laser beam. The selective laser sintering (SLS) method is a method for sintering metal powder using a laser beam. In the SLM method and SLS method using a laser beam, melting and solidification of the metal powder proceed under an inert atmosphere such as nitrogen gas. The Fe-based alloy member of the embodiment can be manufactured by repeatedly performing a melting and solidification process in which the above-described Fe-based alloy powder is irradiated with a heat source such as an electron beam or laser beam to cause melting and solidification to form a solidified layer, thereby further layering solidified layers on the solidified layer.

The selective electron beam melting (SEBM/EBM) method is a method that melts metal powder using an electron beam as a heat source. The EBM method using an electron beam is performed by irradiating the metal powder with an electron beam and converting kinetic energy into heat to melt the metal powder. In the EBM method, irradiation of the electron beam and melting and solidification of the metal powder are performed under high vacuum.

The directed energy deposition (DED) method is a method for manufacturing by supplying metal powder and irradiating a beam toward a base material or an already formed molding region, and melting and solidifying the metal powder supplied to the molding region. In the DED method, a three-dimensional deposited body, that is, an additive manufacturing body, can be manufactured by scanning the supply of the metal powder and irradiation of the beam twodimensionally or three-dimensionally, and repeating the deposition of a solidified metal on the already formed molding region.

The DED method is also called the metal deposition method. The DED method includes a laser metal deposition (LMD) method that uses a laser beam as a heat source, and a method that uses an electron beam as a heat source. Among the DED methods, the method of applying a powder buildup to a base material using a laser beam is also called laser powder buildup welding.

Among various types of additive manufacturing methods, the powder bed fusion (PBF) method has the advantage of high shape accuracy of build parts. On the other hand, the directed energy deposition (DED) method has the advantage of enabling high-speed molding. In particular, among powder bed fusion (PBF) methods, the selective laser melting (SLM) method enables selective melting and solidification of metal powder by irradiating a laser with a minute beam diameter to a powder bed having a thickness of several tens of µm per layer.

Additionally, the powder particle diameter may be adjusted by sieve classification using a mesh or air classification according to the molding method of the additive manufacturing method. For example, powder for additive manufacturing used in powder bed fusion using an electron beam or laser beam melts powder with a laser beam serving as a heat source, while coarse powder that is difficult to melt needs to be removed to minimize the range of thermal influence as much as possible. Moreover, fine powder with high adhesion also needs to be removed to obtain optimal fluidity for ensuring powder spreadability.

For example, in the case of applying to powder bed fusion (PBF), it is preferable to adjust an average particle diameter (D50) of the alloy powder to a range of 10 to 60 µm. Also, for example, metal powder used in directed energy deposition requires removal of coarse powder that is difficult to melt, in order to melt powder by the laser beam serving as a heat source. Additionally, it is necessary to remove fine powder for the purpose of preventing dust scattering during powder supply to the heat source and ensuring fluidity that enables easy powder transport. Therefore, in the case of applying the powder for additive manufacturing of the present invention to directed energy deposition, it is preferable to adjust D50 to a range of 50 to 120 µm. Furthermore, in the case of using an electron beam or plasma as the heat source, it becomes probable to perform molding using coarser metal particles, so D50 is preferably 75 to 250 µm.

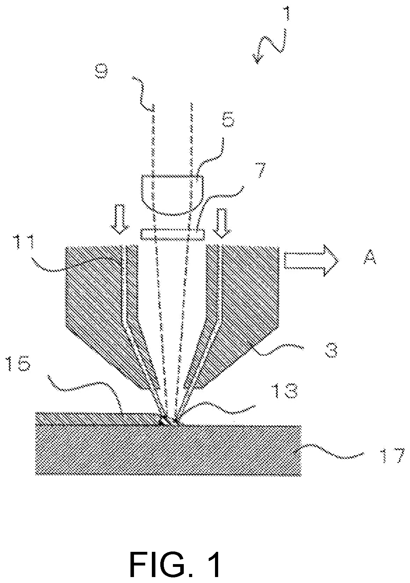

FIG. 1 shows a schematic configuration of an additive manufacturing device 1 that performs additive manufacturing using a laser beam as a heat source in a directed energy deposition method. The additive manufacturing device 1 mainly includes a powder supply nozzle 3, a focusing lens 5, a protective lens 7, and the like. Alloy powder 11 is supplied to the powder supply nozzle 3 and is ejected to the tip of the powder supply nozzle 3 together with argon gas. A laser beam 9 emitted from a laser oscillator (not shown) is focused by the focusing lens 5 and irradiated near the tip portion of the powder supply nozzle 3. The protective lens 7 is provided below the focusing lens 5.

In additive manufacturing, the powder supply nozzle 3 is moved relative to a base plate 17 (direction A in the figure) while supplying the alloy powder 11 onto the base plate 17. At this time, the supplied alloy powder 11 is irradiated with the laser beam 9 focused by the focusing lens 5, forming a molten pool 13 where the alloy powder 11 is melted and then solidified to form a deposited body 15 (Fe-based alloy). The process is repeated using a program file created with CAD-CAM software, and the deposited body 15 is layered on the base plate 17 to form a three-dimensional alloy member including at least a portion of Fe-based alloy.

In the directed energy deposition method, a (three-dimensional) additive manufacturing device is used to rapidly melt the surface of a substrate such as a base plate, deposited body, or mold by laser irradiation, supply raw material powder into the molten pool formed by melting, and rapidly cool and solidify the raw material powder. A deposited body is fabricated by repeating and layering this series of processes. The deposited body formed on the base plate corresponds to the Fe-based alloy member of the embodiment. In the case of mold repair, a manufactured product can be obtained. The additive manufacturing conditions are appropriately determined considering the particle diameter and composition of the raw material powder, the size, shape, and characteristics of the deposited body, production efficiency, and the like. For the alloy of the embodiment, for example, selection can be made from the following ranges.

### <Additive Manufacturing Conditions>

The layer thickness during additive manufacturing can be, for example, 0.1 mm to 1.0 mm, and preferably 0.4 to 0.8 mm. The thickness of the first layer of Fe-based alloy formed on the surface of the base material (base plate) (thickness including the dilution layer near the interface from the interface of the base material to the surface of the first layer of the Fe-based alloy) is 0.1 mm to 1 mm. The thickness of all layers from the interface of the base material to the surface of the Fe-based alloy (thickness including the dilution layer near the interface) is preferably 0.1 mm to 5 mm to prevent peeling of the Fe-based alloy from the base material and cracking of the Fe-based alloy itself. Here, the dilution layer refers to a layer where the base material and the first layer of the Fe-based alloy melt together during molding of the first layer of the Fe-based alloy, and the compositions of both the base material and the first layer of the Fe-based alloy are mixed.

Next, the beam diameter of the laser is preferably approximately 3 mm at the irradiation position. The laser output is preferably 1500 to 2500 W. The laser scanning speed is preferably 500 to 1000 mm/min. The powder supply amount is preferably 10 to 20 g/min.

The density of energy input by laser irradiation to rapidly melt the raw material powder (energy density of heat source: J/mm) is preferably 90 to 300 J/mm, and more preferably in the range of 180 to 240 J/mm. In the case of the energy density being too small, the defect rate increases, and furthermore, the supplied powder does not melt, making it difficult to maintain the shape of the deposited body. On the other hand, in the case of the energy density being too large, a wide range of the base plate or deposited body centered on the laser irradiation position melts, also making it difficult to maintain the shape of the deposited body. The energy density E (J/mm) can be obtained by P/v×60 using laser output P (W) and laser scanning speed v (mm/min).

### (Heat Treatment)

The Fe-based alloy of the embodiment may be subjected to quenching treatment for hardness improvement, and if cost and other factors are within an acceptable range, tempering treatment may be additionally applied for the purpose of removing quenching stress and improving toughness. As heat treatment conditions, for example, in the case of quenching treatment, the alloy can be held at 1180 to 1220°C for 10 to 60 minutes and then cooled in oil or water. To prevent strain and quench cracking, cooling in oil is more preferable. Quenching and cooling using a salt bath may also be performed. Tempering treatment is a heat treatment process of holding at 400°C to 700°C, and for example, it is preferable to hold at 560 to 580°C for 2 to 6 hours and then air cool.

### (Hardness)

The hardness of the surface layer of the Fe-based alloy or alloy member of the embodiment can be evaluated by Vickers hardness HV (hereinafter referred to as hardness), and is desirably 350 HV or more, preferably 500 HV or more. As a method for measuring hardness, for example, the hardness may be determined from the diagonal length of an indentation formed on the measurement surface by pushing the indenter, with the pushing load of the Vickers indenter set to 0.5 kg and the dwell time during pushing set to 10 seconds.

Additionally, the method may further include a surface treatment process of performing surface treatment on the obtained alloy member. The surface treatment process is, for example, nitriding treatment or film formation by a PVD method on the surface layer of the Fe-based alloy, and is a nitriding layer, compound layer, or ceramic coating layer. In the surface treatment processes, a coating harder than the Fe-based alloy formed by additive manufacturing can be formed on the surface layer of the Fe-based alloy, so that wear resistance can be improved by further strengthening the surface of the alloy member obtained by additive manufacturing.

### [Manufactured Product]

A manufactured product having at least a portion of the alloy member obtained in this manner is not particularly limited, but is particularly suitable for, for example, hot stamping molds, cold forging molds, and cold press molds. In this case, for example, even if a portion of the surface of the mold is damaged, repair can be easily performed by forming an alloy layer of the present invention merely on the damaged portion by overlay welding. At this time, the mold repaired with the Fe-based alloy according to the embodiment is less likely to develop cracks and excels in toughness and heat crack resistance.

### Example

To obtain a deposited body with the target composition, raw materials of each of elements shown in Table 1 were weighed in predetermined amounts, and the mixed raw materials were loaded into a crucible, melted by high-frequency heating in vacuum, the molten alloy was dropped from a nozzle below the crucible, and sprayed with high-pressure argon to produce gas atomized powder. The gas atomized powder was classified to obtain Fe-based alloy powder of 53 to 106 µm with D50 of 75.8 µm. The composition of the obtained Fe-based alloy powder is shown in Table 1, and a particle size distribution thereof is shown in Table 2.

**[Table 1]**

| (mass%) | | | | | | | |
|---|---|---|---|---|---|---|---|
| C | Si | Mn | Cr | W | Mo | V | Fe |
| 0.818 | 0.73 | 0.28 | 4.50 | 1.76 | 2.97 | 2.81 | Bal. |

**[Table 2]**

| Particle size distribution [µm] | | |
|---|---|---|
| d10 | d50 | d90 |
| 52.1 | 75.8 | 110.8 |

Next, using a directed energy deposition type three-dimensional additive manufacturing device (LASERTEC65 3D Hybrid manufactured by DMG Mori Co., Ltd.), raw material powder was supplied to a molten pool formed by laser irradiation on a base plate, and melted and solidified to produce a deposited body (alloy member) with a width of 3 mm, a length of 80 mm, and a layered height of approximately 10 mm. The additive manufacturing conditions were as follows. For the base plate, maraging steel (YAG300 manufactured by Proterial, Ltd. (YAG is a registered trademark of Proterial, Ltd.)) was used.

### (Additive Manufacturing Conditions)

· Layer thickness during additive manufacturing: 0.47 mm
· Laser beam diameter: approximately 3 mm
· Laser output: 2400W
· Laser scanning speed: 600 mm/s
· Energy density: 240 J/mm

The deposited bodies subjected to heat treatment and the deposited bodies not subjected to heat treatment were evaluated. The deposited body subjected to merely quenching treatment was designated as F1, the deposited body subjected to quenching treatment and tempering treatment was designated as F2, the deposited body not subjected to heat treatment was designated as F3, and the deposited body subjected to merely tempering treatment was designated as F4. The quenching treatment was performed by holding at 1200°C for 0.5 hours, followed by cooling in oil. The tempering treatment was performed by holding at 560°C for 4 hours, followed by air cooling.

First, the eposited bodies F1 and F2 were observed and evaluated using an SEM. Test pieces for evaluation were prepared by cutting a portion of the deposited body into small pieces, embedding the small pieces in resin, and then polishing the cut surface of the embedded deposited body to a mirror finish. The observation magnification was 3000×. Additionally, elemental analysis in the same field of view was performed using EDS attached to the SEM. The analyzed element types were eight kinds: C, Cr, Fe, Mo, O, V, and W.

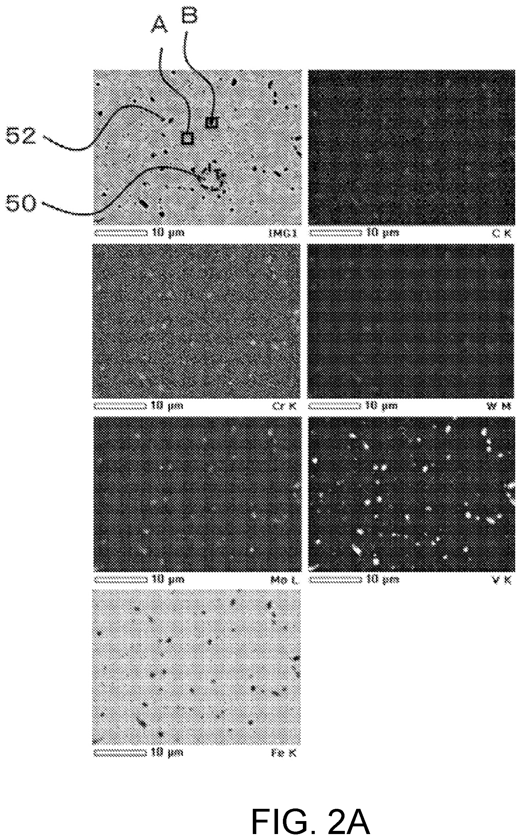

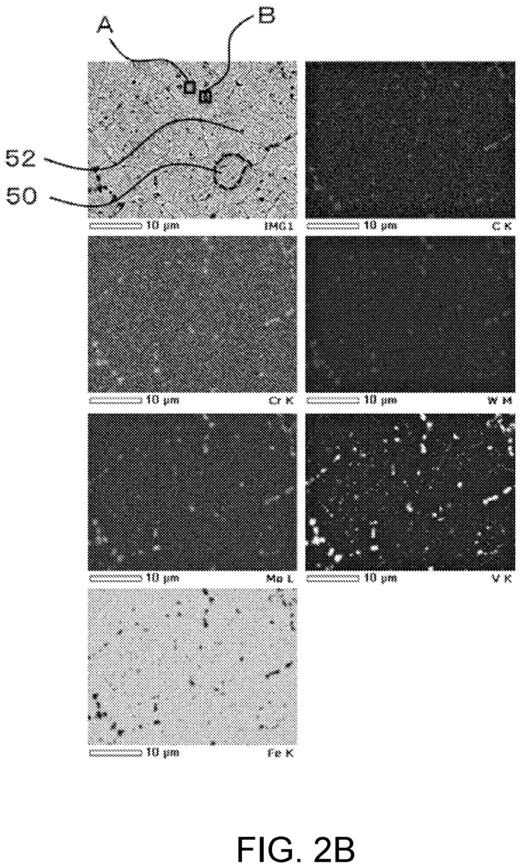

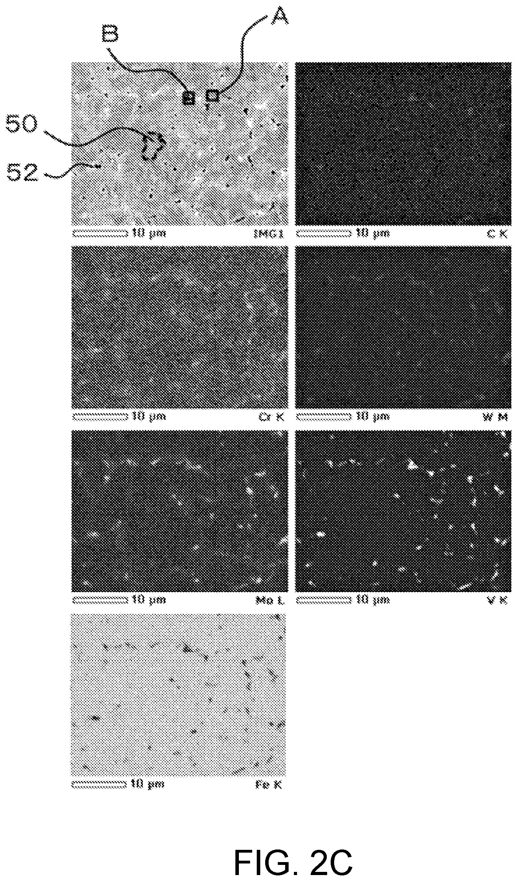

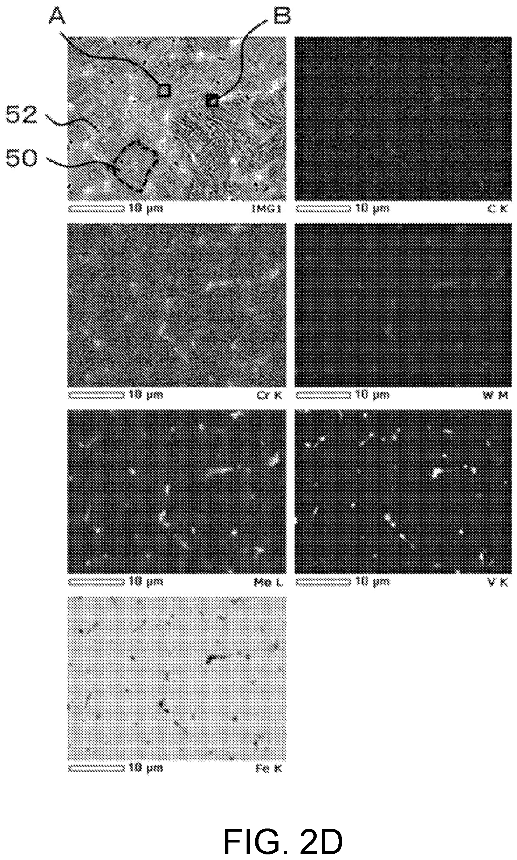

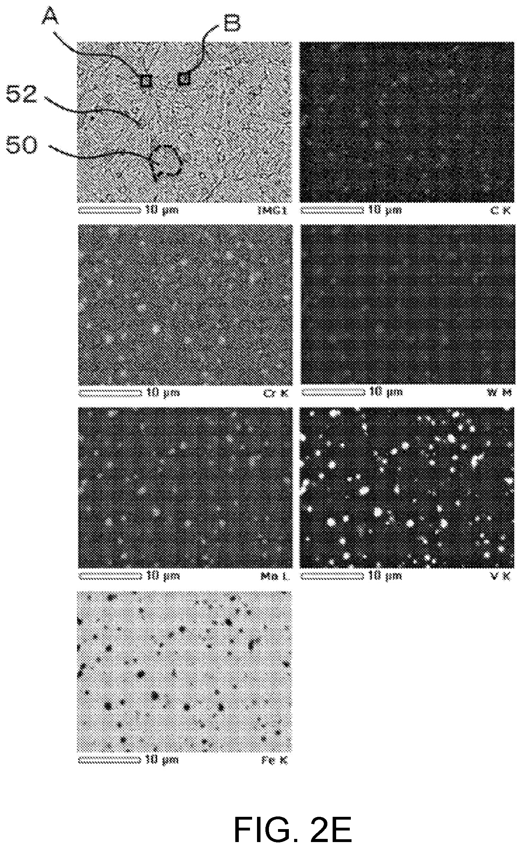

FIG. 2Ato FIG. 2E show examples of the acquired SEM images and EDS images. FIG. 2A shows SEM images and EDS images obtained by cross-sectional microstructure observation of an arbitrary cross-section of the alloy of the deposited body F1 that was subjected merely to quenching treatment as heat treatment, FIG. 2B shows those of the deposited body F2 that was subjected to quenching treatment and tempering treatment, FIG. 2C shows those of the deposited body F3 that was not subjected to heat treatment, and FIG. 2D shows those of the deposited body F4 that was subjected merely to tempering treatment. FIG. 2E shows SEM images and EDS images of forged material F0 made from an alloy of the same composition by conventional powder metallurgy method, where a forged material F0 was prepared by sintering powder, forging, and subjecting to the same quenching treatment and tempering treatment as described above.

Referring to FIG. 2A to FIG. 2E, in addition to confirming the structure shown by gray shading, a phase map using EBSD was also obtained by the aforementioned method. The area of the field of view (also referred to as the field region) was set to 200 µm × 200 µm. Furthermore, elemental analysis was performed on the Fe-BCC phase and precipitated carbide portions within the field of view. The elemental analysis types were six types: C, Cr, W, Mo, V, and Fe.

Element analysis was performed on the A portions shown in FIG. 2A, FIG. 2B, FIG. 2C, FIG. 2D, and FIG. 2E for a Fe-BCC phase 50, and on the B portions shown in FIG. 2A, FIG. 2B, FIG. 2C, FIG. 2D, and FIG. 2E for a precipitated carbide 52.

Table 3 shows the respective compositions of the Fe-BCC phases and precipitated carbides for the deposited bodies F1 to F4 and the forged material F0. Table 3 shows the case where the total of C, Cr, W, Mo, V, and Fe is 100%. Although not included as elemental analysis types this time, the Fe-BCC phase may include Si and Mn. For F3, the size and ratio of precipitated carbides are extremely small and fall below the resolution of the detection device, resulting in large errors depending on the analysis location and preventing proper measurement, so numerical values are not indicated.

**[Table 3]**

| (mass%) | | | | | | | |
|---|---|---|---|---|---|---|---|
| | Analysis target | C | Cr | W | Mo | V | Fe |
| F1 | Fe-BCC phase | 4.9 | 4.4 | 1.7 | 2.5 | 2.2 | 84.4 |
| | Precipitated carbide | 14.7 | 3.9 | 8.3 | 10.6 | 42.8 | 19.8 |
| F2 | Fe-BCC phase | 5.8 | 4.8 | 2.1 | 3.0 | 2.3 | 82.0 |
| | Precipitated carbide | 12.2 | 4.3 | 4.0 | 6.2 | 18.0 | 55.3 |
| F3 | Fe-BCC phase | 5.3 | 3.8 | 2.4 | 2.2 | 2.6 | 83.7 |
| | Precipitated carbide | - | - | - | - | - | - |
| F4 | Fe-BCC phase | 4.9 | 4.7 | 2.1 | 3.3 | 2.5 | 82.5 |
| | Precipitated carbide | 11.5 | 5.6 | 6.1 | 9.0 | 24.6 | 43.0 |
| F0 | Fe-BCC phase | 4.7 | 3.8 | 2.0 | 3.2 | 1.4 | 84.9 |
| | Precipitated carbide | 12.9 | 4.7 | 6.2 | 7.6 | 21.5 | 47.1 |

As shown in Table 3, the Fe-BCC phase of F1 included 84.4% of Fe, 4.9% of C, 4.4% of Cr, 1.7% of W, 2.5% of Mo and 2.2% of V. Additionally, the precipitated carbide included 19.8% pf Fe, 14.7% of C, 3.9% of Cr, 8.3% of W, 10.6% of Mo and 42.8% of V.

The Fe-BCC phase of F2 included 82.0% of Fe, 5.8% of C, 4.8% of Cr, 2.1% of W, 3.0% of Mo and 2.3% of V. In addition, the precipitated carbide included 55.3% of Fe, 12.2% of C, 4.3% of Cr, 4.0% of W, 6.2% of Mo and 18.0% of V.

The Fe-BCC phase of F3 included 83.7% of Fe, 5.3% of C, 3.8% of Cr, 2.4% of W, 2.2% of Mo and 2.6% of V.

The Fe-BCC phase of F4 included 82.5% of Fe, 4.9% of C, 4.7% of Cr, 2.1% of W, 3.3% of Mo and 2.5% of V. Additionally, the precipitated carbide included 43.0% of Fe, 11.5% of C, 5.6% of Cr, 6.1% of W, 9.0% of Mo and 24.6% of V.

The Fe-BCC phase of F0 included 84.9% of Fe, 4.7% of C, 3.8% of Cr, 2.0% of W, 3.2% of Mo and 1.4% of V. In addition, the precipitated carbide included 47.1% of Fe, 12.9% of C, 4.7% of Cr, 6.2% of W, 7.6% of Mo and 21.5% of V.

On the other hand, the compositions of precipitated carbides showed different tendencies in the deposited bodies F1 to F4. In the deposited body F1, which was subjected merely to quenching treatment, V (vanadium) carbides and composite carbides of Mo and W with Fe were difficult to decompose, and C derived from the carbides did not dissolve in solid solution in the Fe-BCC phase. Therefore, it is considered that the concentrations of V, Mo, and W in the precipitated carbides increased.

The deposited body F2 subjected to quenching treatment and tempering treatment confirmed that V, Mo, and W precipitated in the precipitated carbide due to the quenching treatment and tempering treatment, but it is considered that the ratio of V, Mo, and W in the precipitated carbide became relatively small due to the additional precipitation of carbides of Fe and Cr, which are main components.

Regarding the deposited body F4 that was subjected to merely tempering treatment, considering that the deposited body was subjected to short-time quenching treatment by a heat source due to the manufacturing process of the additive manufacturing method, it can be estimated that the deposited body experienced a thermal history similar to the deposited body F2 that was subjected to quenching treatment and tempering treatment. As can be understood from the above analysis results, the deposited body F4, similar to F2, has V, Mo, and W present in the precipitated carbide, and in addition, carbides of Fe and Cr, which are main components, are also precipitated, and it is considered that the ratio of V, Mo, and W in the precipitated carbide became relatively smaller compared to the deposited body F1.

The deposited body F3 that did not undergo heat treatment has a high cooling rate after molding, and although fine carbides precipitate locally, it is presumed that the size thereof was below the resolution of the detector.

The forged material F0 was subjected to quenching and tempering treatment under the same conditions as F2, and tempering treatment under the same conditions as F4. However, the compositions of precipitated carbides differed significantly between the deposited body F2 and the forged material F0. This is considered to be due to the difference that the additive manufacturing method for producing the deposited body has a faster cooling rate from the molten state to the solidified state, that is, a faster melting and solidification rate, than the forged material.

Note that, regarding the deposited bodies F1 to F0 described above, as a result of measuring electron diffraction patterns generated during electron beam irradiation onto the surfaces of the deposited bodies F1 to F0 by EBSD, it was confirmed that the deposited bodies F1 to F0 have Fe-BCC phases due to BCC structures thereof. In the deposited bodies F1 to F4 and the forged material F0, although the heat treatment and manufacturing processes differ, since the deposited bodies F1 to F4 and the forged material F0 originally derive from powder of the same composition, no significant difference was observed in the element composition of the Fe-BCC phase.

Next, using the aforementioned method, the ratio of the Fe-BCC phase occupying the field of view, the equivalent circular average particle diameter of the Fe-BCC phase, the ratio of the precipitated carbide occupying the field of view, and the equivalent circular average particle diameter of the precipitated carbide were calculated. Table 4 shows the ratio of the Fe-BCC phase, the equivalent circular average particle diameter of the Fe-BCC phase, the ratio of the precipitated carbide, and the equivalent circular average particle diameter of the precipitated carbide in the deposited bodies F1 to F4 and the forged material F0.

**[Table 4]**

| No. | Ratio of Fe-BCC phase (%) | Equivalent circular average particle diameter of Fe-BCC phase (µm) | Ratio of precipitated carbide (%) | Equivalent circular average particle diameter of precipitated carbide (µm) |
|---|---|---|---|---|
| F1 | 43.8 | 5.24 | 2.79 | 1.39 |
| F2 | 44.7 | 5.20 | 5.95 | 1.41 |
| F3 | 45.1 | 8.38 | 0.064 | 1.42 |
| F4 | 56.2 | 7.29 | 0.13 | 1.14 |
| F0 | 43.3 | 5.33 | 3.73 | 1.33 |

As shown in Table 4, the ratio of the Fe-BCC phase, in terms of the area ratio, showed higher values (43.8% to 56.2%) for the deposited bodies F1 to F4 than the 43.3% of the forged material F0. Additionally, the ratios of the Fe-BCC phases for the deposited body F3, which did not undergo heat treatment, and the deposited body F4, which underwent merely tempering treatment, were 45.1% and 56.2%, respectively, showing higher values than the deposited body F1, which underwent merely quenching treatment, and the deposited body F2, which underwent both quenching treatment and tempering treatment.

The ratio of the precipitated carbide was highest in the deposited body F2 at 5.95%, followed by the deposited body F1 at 2.79%, the deposited body F4 at 0.13%, and the deposited body F3 at 0.064% in that order. The ratio of the precipitated carbide in the forged material F0 was 3.73%. From the results, it was confirmed that the deposited bodies F3 and F4 have a lower ratio of the precipitated carbide than the deposited bodies F1 and F2 and the forged material F0.

The equivalent circular average particle diameter of the precipitated carbide was largest for the deposited body F3 at 1.42 µm, followed by the deposited body F2 at 1.41 µm, the deposited body F1 at 1.39 µm, the forged material F0 at 1.33 µm, and the deposited body F4 at 1.14 µm in that order.

In the deposited bodies F3 and F4, the ratio or equivalent circular average particle diameter of precipitated carbides became smaller than in the deposited bodies F1 and F2. In the deposited bodies F1 to F4, the cooling rate during manufacturing is high and the carbide formation time is short, so it is considered that the amount of carbides formed inside the alloy (deposited body) in the state before heat treatment becomes less compared to the forged material F0.

Furthermore, in the deposited bodies F3 and F4, since quenching treatment was not performed, decomposition of carbides present in the deposited body in an unheat-treated state, solid solution of C into the Fe-BCC phase, and diffusion were unlikely to occur. Therefore, C that combines with carbide forming elements such as Cr, W, Mo and V contained in the Fe-based alloy became insufficient, making carbide formation difficult. This is considered to be the factor that caused the ratio or equivalent circular average particle diameter of precipitated carbides to become smaller.

From the above, it was confirmed that the deposited bodies F1 to F4 have a higher ratio of the Fe-BCC phase compared to the forged material F0.

The deposited bodies F1 to F4 can be said to have more uniform structures because the ratio of the Fe-BCC phase is 43.5% or more in terms of the area ratio. Additionally, although the deposited bodies F1 to F4, which are additive manufacturing products, are unable to be simply compared with the forged material F0, the deposited bodies F1 to F4 have a higher ratio of the Fe-BCC phase than F0.

Therefore, in the case of the deposited bodies F1 to F4, for example, local strain is less likely to occur due to external stress, so cracks can be expected to be less likely to occur. Further, in the deposited bodies F1 to F4, the equivalent circular average particle diameter of the precipitated carbides is small and the precipitated carbides are refined, so cracks are less likely to occur, and the Fe-based alloy can be expected to be exemplary in toughness and heat crack resistance, and also exemplary in wear resistance.

Furthermore, F1 and F2 have an equivalent circular average particle diameter of the Fe-BCC phase of 7.0 µm or less and a ratio of the precipitated carbide exceeding 0.1%. Since the size of the Fe-BCC phase is not excessively large and the carbide is precipitated in the Fe-BCC phase, the alloy can be expected to be further exemplary in mechanical strength, toughness, heat crack resistance, and wear resistance.

### [Hardness]

Next, the hardness of the deposited bodies F1 to F4 and the forged material F0 was measured using a Vickers hardness tester. The measurement conditions were set with a pushing load of the Vickers indenter of 0.5 kg and a dwell time during pushing of 10 seconds, and the hardness was determined from the diagonal length of an indentation formed on the measurement surface by pushing the indenter. The number of measurement points was 5, and the average value thereof was determined. The results are shown in Table 5.

**[Table 5]**

| No. | Quenching treatment | Tempering treatment | Hardness (HV) |
|---|---|---|---|
| F1 | Yes | - | 725 |
| F2 | Yes | Yes | 710 |
| F3 | - | - | 408 |
| F4 | - | Yes | 405 |
| F0 | Yes | Yes | 827 |

As shown in Table 5, it was confirmed that the deposited body F1, which was subjected to merely quenching treatment, had 725 HV, and the deposited body F2, which was subjected to quenching treatment and tempering treatment, had 710 HV. The deposited body F3 without heat treatment (no heat treatment) had 408 HV, and the deposited body F4, which was subjected to merely tempering treatment, had 405 HV. From this, it was confirmed that in the case of improving wear resistance, it is preferable to perform at least quenching treatment on the deposited body like the deposited bodies F1 and F2.

As described above, the deposited body F1 subjected merely to quenching treatment, the deposited body F2 subjected to quenching treatment and tempering treatment, the deposited body F3 not subjected to heat treatment, and the deposited body F4 subjected merely to tempering treatment have Fe-BCC phase ratios of 43.5% or more as shown in Table 4, and therefore have uniform structures. For example, since occurrence of local strain can be suppressed by external stress, it can be expected that cracks are unlikely to occur.

Furthermore, the deposited body F1 subjected merely to quenching treatment and the deposited body F2 subjected to quenching and tempering treatment have equivalent circular average particle diameters of precipitated carbides of 1.39 µm and 1.41 µm, respectively, as shown in Table 4. Since the precipitated carbides are appropriately refined, cracks are less likely to occur, and in addition to exemplary toughness and heat crack resistance, exemplary wear resistance can also be expected.

### Reference Signs List

- 1: additive manufacturing device

- 3: powder supply nozzle
- 5: focusing lens
- 7: protective lens
- 9: laser beam
- 11: alloy powder
- 13: molten pool
- 15: deposited body
- 17: base plate
- 50: Fe-BCC phase
- 52: precipitated carbide

## Claims

1. A Fe-based alloy, comprising:
C, Cr, W, Mo and V, with the remainder consisting of Fe and inevitable impurity elements, and
having an alloy structure comprising an Fe-BCC phase,
the Fe-BCC phase comprising, in mass%,
when a total of C, Cr, W, Mo, V and Fe is 100%,
C of 3.0% or more and 7.0% or less,
Cr of 2.0% or more and 6.0% or less,
W of 0.5% or more and 4.0% or less,
Mo of 0.5% or more and 4.0% or less,
V of 0.5% or more and 4.0% or less, and
Fe of 75.0% or more and 93.5% or less, and
having a precipitated carbide precipitated in the Fe-BCC phase, and
a ratio of the Fe-BCC phase being 43.5% or more in terms of an area ratio in cross-sectional microstructure observation.

2. The Fe-based alloy according to claim 1, wherein
the entire Fe-based alloy comprises, in mass%,
C of 0.1% or more and 2.0% or less,
Cr of 2.0% or more and 6.0% or less,
W of 0.5% or more and 4.0% or less,
Mo of 0.5% or more and 4.0% or less,
V of 0.5% or more and 4.0% or less,
Si of 1.0% or less, and
Mn of 1.0% or less,
with
the remainder consisting of Fe and the inevitable impurities.

3. The Fe-based alloy according to claim 1 or 2, wherein
the Fe-BCC phase comprises, in mass%,
C of 4.8% or more and 6.0% or less,
Cr of 3.9% or more and 6.0% or less,
W of 1.5% or more and 3.0% or less,
Mo of 2.2% or more and 3.1% or less, and
V of 1.5% or more and 3.0% or less.

4. An alloy member, comprising at least a portion of the Fe-based alloy according to claim 1.

5. The alloy member according to claim 4, wherein hardness of the Fe-based alloy is 700 HV or more.

6. A method for manufacturing an alloy member, comprising:
using alloy powder which comprises
in mass%,
C of 0.1% or more and 2.0% or less,
Cr of 2.0% or more and 6.0% or less,
W of 0.5% or more and 4.0% or less,
Mo of 0.5% or more and 4.0% or less,
V of 0.5% or more and 4.0% or less,
Si of 1.0% or less, and
Mn of 1.0% or less, with
the remainder consisting of Fe and inevitable impurities;
irradiating the alloy powder with an electron beam or laser beam to cause melting and solidification to form a solidified layer; forming a new solidified layer on the solidified layer; and then repeating such an operation to obtain an alloy member having a layered structure.
